# EUROPEAN PATENT SPECIFICATION

(11) **EP 3 339 572 B1**
(45) Date of publication and mention of the grant of the patent: **08.01.2020**
(21) Application number: 17202515.7
(22) Date of filing: 20.11.2017
(51) Int. Cl.: F01D 5/14, F01D 17/16, F04D 27/00, F04D 27/02, F04D 29/46, F04D 29/56

(54) **VARIABLE GUIDE VANE DEVICE**
VARIABLE LEITSCHAUFELVORRICHTUNG
SYSTÈME D'AUBES DE GUIDAGE VARIABLES

(30) Priority: 20.12.2016 GB 201621739
(43) Date of publication of application: 27.06.2018
(73) Proprietor: Rolls-Royce plc, London SW1E 6AT (GB)
(72) Inventor: Hield, Paul, Derby, Derbyshire DE24 8BJ (GB)
(74) Representative: Rolls-Royce plc

(56) References cited:
- EP-A2- 2 730 752
- WO-A1-2016/120316
- JP-A- S5 246 215
- US-A- 2 316 452
- US-A- 4 874 289
- US-A- 5 873 700
- US-A1- 2015 192 298

## Description

The present disclosure concerns a variable guide vane device for a gas turbine engine.

Variable guide vanes are known for use in gas turbine engines for deflecting incoming air, for example ahead of a compressor rotor to thereby optimise the incoming airflow to the operating condition of the engine and improve stability.

Variation of the guide vane can be effected in various ways, but in certain cases the vane may be formed of two sections, one of which is movable to allow variation of the shape of the guide vane to change the flow of incoming air.

US 4 874 289 A discloses a variable angle vane stator arrangement enabling widely variable angular stator vane positioning with little aerodynamic loss. This is accomplished by positioning the leading nose portion of each variable second row vane axially ahead of, and adjacent, the trailing edge of an associated fixed vane of a first row of vanes to produce a slot between the adjacent vanes through which air can flow. The axis of rotation of each variable vane is located off of the variable vane itself in a manner to maintain good slot geometry over a wide range of vane stagger angles. The variation of the rear vane stagger angle creates a variation in the direction of the exit air vector, which in turn enhances the performance of the following rotor blade row.

US 2015/192298 A1 discloses a turbofan engine in which a fan is driven by a low pressure turbine through a gear reduction. The turbofan engine includes a variable geometry fan exit guide vane system having multiple circumferentially spaced radially extending fan exit guide vanes. Rotation of the fan exit guide vanes between a nominal position and a rotated position selectively changes a fan bypass flow path to permit efficient operation at various flight conditions.

US 2 316 452 A discloses an axial blower in which a portion of the compressed fluid is branched off and led to a turbine mounted upon the same shaft. A ring of guide blades is provided in which there is a fixed part and a rotating part.

EP 2 730 752 A2 discloses a compressor section of a gas turbine generally includes a stage of inlet guide vanes positioned adjacent to an inlet of the compressor section and a stage of rotor blades disposed downstream from the inlet guide vanes. A stage of stator vanes is positioned downstream from the stage of rotor blades. The stage of stator blades includes a row of leading guide vanes having a trailing edge. A row of trailing guide vanes coupled to an actuator is disposed between two corresponding adjacent leading guide vanes. Each of the trailing guide vanes includes a trailing edge. The leading edge of each trailing guide vane is disposed upstream of the trailing edge of a corresponding leading guide vane when the trailing guide vane is in an open position and downstream from the trailing edge of the corresponding leading guide vane when the trailing guide vane is in a closed position.

JP S52 46215 A discloses a two shaft gas turbine engine in which the power turbine comprises a single stage that is closely coupled to the compressor turbine through an annular transition portion having radially diverging side walls forming an inner and outer shroud. The relatively high velocity of the working fluid is maintained through the transition portion by an array of non-rotating stationary struts. Each strut defines a camber line which at the entry of the strut is angled to receive the working fluid, having a swirl component therein, at a 0° angle of incidence. Further, each strut has a configuration which, in cooperation with the increasing angle of the camber line compensates for the divergence of the shrouds to maintain the flow of the working fluid at a generally undiminished velocity therethrough. An array of non-rotating variable vanes is disposed intermediate the downstream end of the struts to direct the working fluid into the power turbine at an optimum angular discharge depending upon the desired output of the power turbine shaft.

WO 2016/120316 A1 discloses a device for controlling the flow in a turbomachine, such as a centrifugal compressor. The device comprises a plurality of fixed blades and a plurality of adjustable blades adjacent to the plurality of fixed blades so that each of the adjustable blades has an aerodynamic interaction with one of the fixed blades. Each of the adjustable blades is pivoted to rotate about a fixed axis substantially located at the center of pressure of the adjustable blade, and the center of pressure is evaluated when the blade is at a reference orientation.

US 5 873 700 A discloses a wear resistant hydraulic machine disposed in pressurized water and having movable guide vanes. The guide vanes have a wear resisting material applied by spraying or welding to the front end of a vane body of each guide vane, to the surface of a vane body portion located below the center of a water flowing portion of the vane body and to upper and lower end faces of the vane body. Consequently, the guide vanes and end faces are protected against wear caused by earth and sand.

It will be understood that improvements may be required in variable inlet guide vanes.

According to a first aspect there is provided a variable guide vane device for a gas turbine engine comprising first and second vanes arranged in axial flow series, the first and second vanes being spaced apart so as to define a radially extending slot for fluid flow therebetween, where in the first vane comprises a pressure surface and a suction surface which taper to meet at the trailing edge of the first vane pressure and suction surfaces to form a line at the trailing edge; the first vane is a fixed vane that is not pivotable;and the second vane is pivotable relative to the first vane about a pivot axis,
characterised in that the pivot axis is located within a body of the first vane.

The first vane may also be known as a first vane section, an upstream vane, a strut, or a fixed aerofoil. The second vane may also be known as a second vane section, a downstream vane, a flap, or a variable incidence aerofoil.

The second vane may have a pressure surface and a suction surface.

The slot may form a non-tortuous flow path for fluid flow between the pressure surface of the first vane and the suction surface of the second vane. The first and second vanes may arranged such that a portion of a fluid flowing from the pressure surface of the first vane is guided through the slot to the suction surface of the second vane. The second vane may be arranged such that, in use, fluid flows through the slot so as to reenergise the boundary layer of the second vane. In use, the fluid may flow from the pressure surface of the first vane to the suction surface of the second vane through the slot.

A width of the slot may greater than a thickness (or width) of the trailing edge of the first vane. A minimum width of the slot may be greater than a predetermined width. The minimum width may be the closest separation or distance between the first and second vanes. The predetermined width may be at least 1%, 3%, 5%, 10% or 20% of a chord length of the first vane. The predetermined width may be at least 1, 2, 3, 5, 10 or 20 times the thickness of the trailing edge of the first vane.

The first and second vanes may form a slotted flap device.

The variable guide vane or variable guide vane device may be an inlet guide vane, and outlet guide vane, or a stator in a compressor stage of a gas turbine engine.

According to a third aspect there is provided a gas turbine engine comprising one or more variable guide vane devices of the present disclosure.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example, with reference to the Figures, in which:
Figure 1 schematically shows a sectional side view of a gas turbine engine;
Figure 2 schematically shows a sectional radial view of a variable guide vane according to an aspect of the present disclosure; and
Figure 3 schematically shows a sectional radial view of a variable guide vane according to an aspect of the present disclosure.

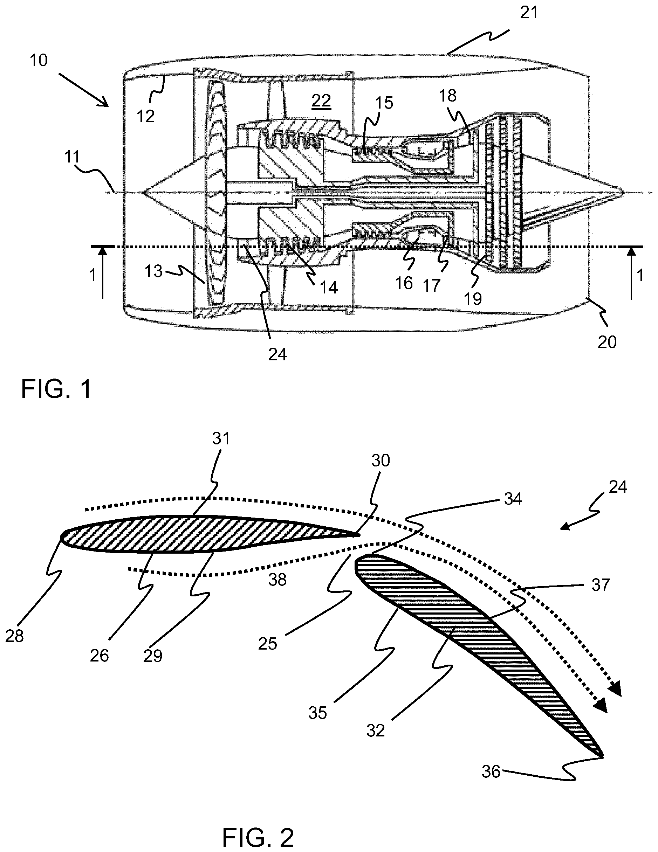

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine also comprises guide vane devices for directing flow at various locations. In this arrangement, a plurality of circumferentially arranged and radially extending inlet guide vane devices 24 are provided upstream of either of the compressors 14, 15. Similar guide vane devices (or guide vanes) may also be provided downstream of either of the compressors 14, 15, which are known as outlet guide vanes. Each stage of the compressors comprises a rotor and a stator, and the stator may also comprise guide vanes of a similar type to those of the present disclosure. For the purposes of the present disclosure, only inlet guide vane devices 24 upstream of the intermediate compressor 14 will be described in detail, but it should be understood that the features of the inlet guide vane devices 24 are equally applicable to inlet guide vanes for the high pressure compressor 15, outlet guide vanes, stators or any other type of guide vanes to be utilised in a gas turbine engine.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place. The inlet guide vane devices 24 upstream of the intermediate compressor 14 are used to ensure that the airflow entering the compressor has the required flow characteristics.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. The present disclosure may be used with or incorporated into a gas turbine for any type of application, including, for example, civil and/or military aircraft gas turbine engines, industrial gas turbine engines or marine gas turbine engines.

The guide vane devices 24 are arranged in the axial flow path of the gas turbine engine 10 immediately upstream of the intermediate pressure (IP) compressor 14 to guide fluid flow entering the IP compressor 14. Guide vanes in this location may be known as inlet guide vanes. A plurality of guide vane devices 24 are disposed about the rotational axis 11 and extend radially from the axis 11 about the circumference of the engine 10.

Depending on the operating conditions of the gas turbine engine 10 the airflow into the IP compressor 14 requires different characteristics in order to maintain stable operation. In particular, at low rotor speeds, the angle of incidence of the airflow onto the first stage rotor of the IP compressor 14 may need to be reduced to avoid instability. As will be described in detail below, the guide vane device 24 is variable so as to change the characteristics, such as the exit angle, of the airflow leaving the guide vane device 24 to meet the requirements for the particular engine operating condition.

In **Figure 2****,** a single guide vane device 24 is shown in section view taken along line 1-1 showing the cross-section of the guide vane device 24 in a plane parallel to the rotational axis 11 and perpendicular to the longitudinal (radial) axis of the guide vane 24. Of course, it should be understood that the engine 10 comprises a plurality of circumferentially arranged and radially extending guide vane devices 24 such that the entire airflow past the set of guide vanes 24 can be controlled simultaneously.

The guide vane device 24 comprises a first vane (or first vane section) 26 arranged upstream of a second vane (or second vane section) 32. As shown in Figure 2, the first vane 26 and second vane 32 each have an aerofoil cross-section and are non-symmetrical across their respective centrelines or centreplanes. However, in other arrangements the first and/or second vane may be symmetrical or non-aerofoil in shape. The first vane 26 has a leading edge 28, a trailing edge 30, a pressure surface 29 and a suction surface 31. The first vane 26 tapers towards the trailing edge and the pressure surface 29 and the suction surface 31 meet at a line to define the trailing edge 30. In this arrangement the first vane 26 has a fixed orientation in the engine 10. The second vane 32 has a leading edge 34, a trailing edge 36, a pressure surface 35 and a suction surface 37. The second vane 32 tapers towards the trailing edge and the pressure surface 35 and the suction surface 37 meet at a line to define the trailing edge 36. The first and second vanes 26, 32 are axially spaced apart and arranged such that an elongate radially extending slot 25 is formed between the trailing edge 30 of the first vane 26 and the leading edge 34 of the second vane 32. The slot 25 extends along the entire radial length of the guide vane device 24. The slot 25 defines a non-tortuous flow path for fluid flow from the pressure surface 29 of the first vane 26 to the suction surface 37 of the second vane 32.

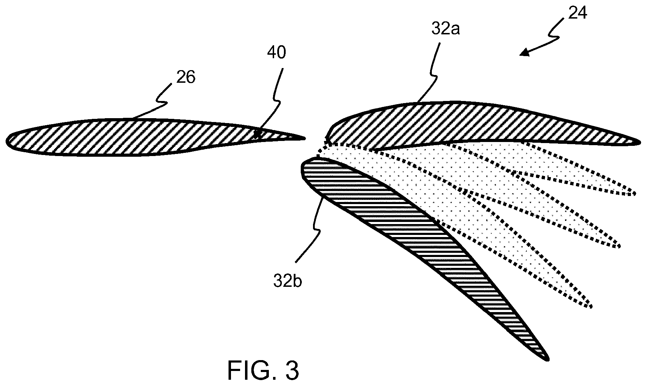

The second vane 32 is movable relative to the first vane 26, in particular, the second vane 32 is pivotable about an axis 40 that is substantially radially extending (shown in Figure 3). In this arrangement the pivot axis 40 of the second vane 32 lies within a body of the first vane 26, but it should be appreciated that in other arrangements the pivot axis 40 may be in a different location, for example outside of the cross-section of the first vane 26, or within the cross-section of the second vane 32. In Figure 2, the second vane 32 is shown in a deflected position in which the chord of the second vane 32 is angled relative to the chord of the first vane 26. As will be described in detail below, the second vane 32 is pivotable such that it can take a range of other positions with respect to the first vane 26.

Although not shown, the engine 10 also comprises a mechanism which is coupled to the second vanes 32 of the set of guide vane devices 24 such that all second vanes 32 can be moved in unison to the same position.

**Figure 3** shows the second vane 24 is shown at a range of angular deflections.

In a first position, 32a, the second vane 32 is oriented with zero or minimal angular deflection such that it is located directly downstream of, or in the wake of, the first vane 26. In other words, the chord of the second vane 32 is substantially parallel to the chord of the first vane 26. In this undeflected position 32a, airflow past the guide vane device 24 is substantially unimpeded apart from very close to the guide vane 24. Therefore, the guide vane device 24 leaves the direction of the airflow downstream substantially unaltered.

If it is required that the airflow onto the first stage rotor has a different characteristic, such as a different angle of incidence, then the guide vane device 24 can be actuated, by pivoting the second vane 32 about the pivot axis 40, to a deflected position 32b. In the deflected position 32b, the chord of the second vane 32 is at angled with respect to the chord of the first vane 26. Therefore, the airflow past the guide vane 24 is altered by the configuration of the second vane 32 such that the airflow encounters the first stage rotor of the IP compressor 14 at a different angle of incidence.

The guide vane 24 can be actuated to a range of intermediate positions having deflection angles between those of the extreme positions 32a and 32b, which are representatively illustrated in dotted lines in Figure 3. Therefore, the characteristics of the airflow leaving the guide vane device 24 can be precisely altered by pivoting the second vane 32 to the required deflection angle.

Returning to Figure 2, the guide vane device 24 is shown with the second vane 32 in a substantially deflected position similar to position 32b. In this position, the guide vane device 24, when considered as a whole, has a large camber angle and angle of attack relative to the incoming airflow. High angles of attack and large camber angles in conventional guide vanes may cause boundary layer or flow separation to occur. When this occurs, the guide vane becomes ineffective at altering the angle of the airflow and introduces extreme and unpredictable turbulence into the airflow. This may reduce the performance of the engine 10 and in some scenarios may cause excitation of the compressor rotors which can lead to increased fatigue and component failures.

In this arrangement, flow separation can be mitigated by allowing air to flow from the pressure surface 29 of the first vane 26, through the slot 25, to the suction surface 37 of the second vane. This airflow through the slot 25 serves to re-energise the airflow over the suction surface 37 of the second vane 32, thereby preventing flow separation. The slot 25 therefore improves the performance of the guide vane device 24 at higher deflection angles. The slot 25 and the vanes 26, 32 can be designed to maintain high momentum flow airflow thought the slot 25 and to provide a non-tortuous flow path through the slot 25. In this arrangement, this is achieved by axially spacing the vanes 26, 32 so as to define a slot 25 that is relatively wide (e.g. wider than the width of the trailing edge 30 of the first vane 26).

The dotted line arrows in Figure 2 illustrate representative airflow paths above and below the first vane 26 on its suction and pressure surfaces 29, 31 respectively. The lower arrow 38 is representative of the airflow from the pressure surface 29 of the first vane 26, which passes through the slot 25 to the suction surface 37 of the second vane. The slot 25 therefore provides a non-tortuous flow path by which air from the pressure surface 27 can re-energise the airflow past the suction surface 37 of the second vane 32.

Air flowing through the slot 25 encourages the airflow from the suction surface 31, illustrated by the upper arrow, to remain attached to the suction surface 37 of the second vane, such that the airflow leaving the trailing edge 36 of the second vane 32 has changed direction relative to the incident airflow at the leading edge 28. Thus, the airflow into the first stage rotors may be substantially altered by pivoting the second vane 32 without risk of flow separation.

During operation of the engine 10, a required airflow characteristic, such as angle of incidence into a stage rotor, may be calculated or identified, for example based upon an operating condition of the gas turbine engine. A guide vane device, such as guide vane device 24, may then be actuated such that the actual airflow characteristic in the engine tends to the required airflow characteristic.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A variable guide vane device (24) for a gas turbine engine comprising first and second vanes (26;32) arranged in axial flow series, the first and second vanes (26;32) being spaced apart so as to define a radially extending slot for fluid flow therebetween, wherein:
the first vane (26) comprises a pressure surface (29) and a suction surface (31) which taper to meet at the trailing edge (30) of the first vane pressure and
suction surfaces (29;31) to form a line at the trailing edge (30);
the first vane (26) is a fixed vane that is not pivotable; and
the second vane (32) is pivotable relative to the first vane (26) about a pivot axis (40),
**characterised in that** the pivot axis (40) is located within a body of the first vane (26).

2. A variable guide vane device (24) as claimed in claim 1, wherein the second vane (32) has a pressure surface (35) and a suction surface (37).

3. A variable guide vane device (24) as claimed in any preceding claim, wherein a width of the slot is greater than a thickness of the trailing edge (30) of the first vane (26).

4. A variable guide vane device (24) as claimed in any preceding claim, wherein the first and second vanes (26;32) form a slotted flap device.

5. A gas turbine engine comprising one or more variable guide vane devices (24) according to any one of the preceding claims.

## Patentansprüche

1. Variable Leitschaufelvorrichtung (24) für einen Gasturbinenmotor, umfassend erste und zweite in axialer Strömungsabfolge angeordnete Schaufeln (26; 32), wobei die erste und zweite Schaufel (26; 32) räumlich voneinander getrennt werden, um einen sich radial erstreckenden Schlitz für Fluidströmung zwischen diesen zu definieren, wobei:
die erste Schaufel (26) eine Druckfläche (29) und eine Saugfläche (31) umfasst, die sich verjüngen, um sich an der Hinterkante (30) der ersten Schaufeldruck- und Saugflächen (29; 31) zu treffen, um an der Hinterkante (30) eine Linie auszubilden;
die erste Schaufel (26) eine feststehende Schaufel ist, die nicht drehbar gelagert ist; und
die zweite Schaufel (32) bezogen auf die erste Schaufel (26) um eine Drehachse (40) drehbar gelagert ist, **dadurch gekennzeichnet, dass** die Drehachse (40) innerhalb eines Körpers der ersten Schaufel (26) angeordnet wird.

2. Variable Leitschaufelvorrichtung (24) nach Anspruch 1, wobei die zweite Schaufel (32) eine Druckfläche (35) und eine Saugfläche (37) aufweist.

3. Variable Leitschaufelvorrichtung (24) nach einem vorhergehenden Anspruch, wobei eine Breite des Schlitzes größer als eine Dicke der Hinterkante (30) der ersten Schaufel (26) ist.

4. Variable Leitschaufelvorrichtung (24) nach einem vorhergehenden Anspruch, wobei die erste und zweite Schaufel (26; 32) eine geschlitzte Klappenvorrichtung bilden.

5. Gasturbinenmotor, umfassend eine oder mehrere variable Leitschaufelvorrichtungen (24) nach einem der vorhergehenden Ansprüche.

## Revendications

1. Dispositif d'aube directrice variable (24) pour un moteur à turbine à gaz comprenant des première et deuxième aubes (26 ; 32) agencées en série d'écoulement axial, les première et deuxième aubes (26 ; 32) étant espacées l'une de l'autre de façon à définir une fente s'étendant radialement permettant un écoulement fluide entre elles, dans lequel :
la première aube (26) comprend une surface de pression (29) et une surface d'aspiration (31) qui s'amincissent pour se rencontrer au bord de fuite (30) des surfaces de pression et d'aspiration de première aube (29 ; 31) pour former une ligne au bord de fuite (30) ;
la première aube (26) est une aube fixe qui n'est pas pivotante ;
et la deuxième aube (32) est pivotante par rapport à la première aube (26) selon un axe de pivot (40), **caractérisé en ce que** l'axe de pivot (40) se situe à l'intérieur d'un corps de la première aube (26).

2. Dispositif d'aube directrice variable (24) selon la revendication 1, dans lequel la deuxième aube (32) a une surface de pression (35) et une surface d'aspiration (37).

3. Dispositif d'aube directrice variable (24) selon l'une quelconque revendication précédente, dans lequel une largeur de la fente est supérieure à une épaisseur du bord de fuite (30) de la première aube (26).

4. Dispositif d'aube directrice variable (24) selon l'une quelconque revendication précédente, dans lequel les première et deuxième aubes (26 ; 32) forment un dispositif à volets à fente.

5. Moteur à turbine à gaz comprenant un ou plusieurs dispositifs d'aubes directrices variables (24) selon l'une quelconque des revendications précédentes.
